Europäisches Patentamt

European Patent Office

Office européen des brevets

(19)

(11) **EP 0 647 175 B1**

(12) **EUROPÄISCHE PATENTSCHRIFT**

(45) Veröffentlichungstag und Bekanntmachung des Hinweises auf die Patenterteilung:
**14.10.1998 Patentblatt 1998/42**

(21) Anmeldenummer: 93923432.4

(22) Anmeldetag: 27.10.1993

(51) Int. Cl.$^6$: **B29C 45/77**, G05B 19/402

(86) Internationale Anmeldenummer:
**PCT/CH93/00251**

(87) Internationale Veröffentlichungsnummer:
**WO 94/22655 (13.10.1994 Gazette 1994/23)**

(54) **SPRITZGIESSMASCHINE MIT ELEKTRISCHEM ANTRIEB SOWIE VERFAHREN ZUR FÜHRUNG DERSELBEN**

INJECTION MOLDING MACHINE WITH AN ELECTRIC DRIVE AND PROCESS FOR GUIDING THE SAME

MACHINE DE MOULAGE PAR INJECTION A ENTRAINEMENT ELECTRIQUE ET SON PROCEDE DE GUIDAGE

(84) Benannte Vertragsstaaten:
**AT CH DE IT LI**

(30) Priorität: **05.04.1993 CH 1036/93**
**11.09.1993 CH 2733/93**

(43) Veröffentlichungstag der Anmeldung:
**12.04.1995 Patentblatt 1995/15**

(73) Patentinhaber: **ProControl AG**
**9230 Flawil (CH)**

(72) Erfinder:
• **SIEGRIST, Ronald**
**CH-9242 Oberuzwil (CH)**
• **STILLHARD, Bruno**
**CH-9011 St. Gallen (CH)**
• **BLÖCHLINGER, Hugo**
**CH-9230 Flawil (CH)**

(74) Vertreter: **Ackermann, Ernst**
**Egghalde**
**9231 Egg-Flawil (CH)**

(56) Entgegenhaltungen:
EP-A- 0 167 631          EP-A- 0 190 644
EP-A- 0 528 040          US-A- 4 369 400

• PATENT ABSTRACTS OF JAPAN vol. 11, no. 295 (M-626) (2742) 24. September 1987 & JP,A,62 087 317 (TOSHIBA MACH. CO. LTD.) 21. April 1987
• PATENT ABSTRACTS OF JAPAN vol. 15, no. 190 (M-1113) 16. Mai 1991 & JP,A,03 047 726 (SUMITOMO HEAVY IND. LTD.) 28. Februar 1991

## Beschreibung

### Technisches Gebiet

Die Erfindung betrifft eine Vorrichtung sowie ein Verfahren zur Steuerung/Regelung des Spritzvorganges in einer Spritzgiessmaschine, über ein Steuerungs- und Regelgerät sowie einer Motorelektronik, wobei die Einspritzschnecke elektromotorisch angetrieben und elektromechanisch übersetzt axial bewegt wird.

### Stand der Technik

Spritzgiessmaschinen dienen der Herstellung von Formteilen aus zum Beispiel thermoplastischem Kunststoff. Der Rohstoff, das Kunststoffgranulat, wird in einem Heizzylinder mittels Plastifizierschnecke aufgeschmolzen und durch Axiales- resp. Längsverschieben der Plastifizierschnecke in eine Form gepresst. Die Form ist die Kavität eines meist zweiteiligen Werkzeuges, welches durch eine bewegliche und eine feste Werkzeugaufspannplatte mit der Schliesskraft zusammengepresst wird. Zur Entnahme des Formteils wird die bewegliche Formhälfte in eine Form-offen-Position gefahren und das Teil durch eine Auswerfvorrichtung aus der Kavität entfernt. Dieser Vorgang wiederholt sich zyklisch. Die Werkzeug- als auch die Auswerferbewegung sind an sich nichtprozessabhängige Bewegungen und sollten aus Gründen der Produktivität sehr schnell, das heisst in möglichst kurzer Zeit ausgeführt werden. Alle diese nichtprozessabhängigen Bewegungen werden in der sogenannten Trockenlaufzeit zusammengefasst. Typische Trockenlaufzeiten einer modernen Spritzgiessmaschine mit 100 t Schliesskraft betragen 1,4 bis 2,9 Sekunden. Die Trockenlaufzeit ist eine der Hauptfaktoren, die die Produktivität begrenzt.

Das zentrale Problem der Spritzgiesstechnik ist das Einspritzen an sich, welches mit kontrollierter Geschwindigkeit, mit hohem Druck und zur richtigen Zeit erfolgen muss. Die Plastifizierschnecke kann einen Spritzdruck von bis zu 2000 bar oder mehr erreichen. Eine wichtige Aufgabe ist die genaue Positionierung besonders der Plastifizierschnecke. Beim Einspritzen muss während der Füllphase die Schneckenvorlaufgeschwindigkeit geregelt sein. Dagegen erfordert die Nachdruckphase einen geregelten Einspritzdruck bzw. Nachdruck. Der entsprechende Ist-Wert stammt von einer oder mehreren Messvorrichtungen. Entgegen allen Erwartungen war es bis heute aber bei elektrischen Antrieben nicht möglich, die eigentlich kritischen Phasen des Staudruck-Aufbaues bei der Plastifizierung sowie der Druckhaltung speziell in der Nachdruckphase genügend zu beherrschen. Es wurden hierzu in jüngster Zeit eine grosse Anzahl Vorschläge gemacht. Unter Ausnutzung von verschiedenen Detektorimpulsen zum Beispiel für die Positionierung der Spindel beziehungsweise der Plastifizierschnecke wurde versucht, die Einspritzmenge, und den Einspritzdruck zu beherrschen (siehe EP PS Nr. 216 940, 217 963, 167 631, 249 641). Dabei werden die Geschwindigkeitsbeziehungsweise Beschleunigungsparameter insbesondere über die Steuerung oder Regelung des Drehmomentes des Antriebsmotores geregelt beziehungsweise gesteuert. Es wurde versucht alle Abweichungen beziehungsweise die dabei entstehenden Fehler schrittweise mit einer Vielzahl spezieller Korrekturvorgänge unter Zuhilfenahme eines Fehlerregisters auszumerzen (EP-PS Nr. 280 734). In Analogie zu hydraulischen Steuerungsbeziehungsweise Antriebsmodellen, basiert dieses Verfahren auf dem Antriebs-Drehmoment zur Kontrolle der Spritzkraft beziehungsweise des Spritzdruckes. Physikalisch gesehen wird ein mehr oder weniger direkter Zusammenhang erwartet, zwischen dem Drehmomentsignal zum Drive (Motorsteuerung- und Regelgerät) und des erzielten beziehungsweise erzielbaren Spritzdruckes.

Die entsprechenden Verfahren haben aber grosse Nachteile. Über den analogen Motorstrom-Begrenzungseingang an den Drives (elektronisches Steuergerät zum Servomotor) lässt sich nämlich nur im Prinzip eine Kraftsteuerung/Regelung erreichen.

Zusammen mit der elastischen Kunststoffmasse im Schneckenzylinder bilden diese bewegten Massen tieffrequente Masse/Feder-Schwinger. Insbesondere wird dadurch das Fertigen von genauen beziehungsweise dünnwandingen Teilen erschwert, vielfach sogar verunmöglicht. Die Beherrschung aller Parameter zum Beispiel wahrend dem Einspritzen und dem Plastifizieren, ganz besonders aber in den Übergangssphasen von dem Füllen zu dem Nachdruck und von dem Nachdruck zu der Plastifizierung begrenzt die Qualität des Spritzgiessteiles.

In der Folge wird die Baueinheit, welche den Geschwindigkeitsregler und insbesondere den Strombeziehungsweise Drehmomentsteller sowie die entsprechende Kommutatorfunktion aufweist, als Kontroller bezeichnet, welche zusammen mit Netzanschluss und verschiedenen Umformungen einen Einzel-Drive darstellt. Wesentlich ist, dass der Drive einen Stromregler aufweist.

Die EPA 528 040 hatte als Aufgabe, alle Phasen des Spritzvorganges (injektion, dwell and backpressure) vollständig auf der Schneckenposition zu basieren. Damit wird aber, wie erst durch die neue Erfindung erkannt werden konnte, dem zentralen Problem der Kompressibilität der Kunststoffmasse nicht Rechnung getragen. Die Leistung kann ohne Berücksichtigung der Kompressiblitität nur mit Qualitätseinbussen gesteigert werden.

### Darstellung der Erfindung

Der Erfindung wurde nun die Aufgabe gestellt, den Arbeitsablauf in noch höherem Grad zu beherrschen, so dass auch wesentliche Leistungssteigerungen möglich sind, ohne Qualitätseinbusse in Bezug auf Genauigkeit und Reproduktionsmöglichkeit für alle wichtigen Parameter beim Spritzgiessen derart, so dass selbst dünnwandige Teile höchster Präzision, zum Beispiel Becher mit 0,4 mm Wandstärke, mit sehr kurzer Zykluszeit herstellbar werden.

Erfindungsgemäss wird die Aufgabe gelöst durch die Merkmale der Ansprüche 1 und 13. Für besonders vorteilhafte Ausgestaltungen der Erfindung wird auf die Ansprüche 2 bis 12 sowie 14 bis 17 Bezug genommen.

Auf Grund der Erfindung ist erkannt worden, dass man bisher zu sehr auf einem Analogiedenken zwischen Hydraulik und Elektrik basierte. Man hatte übersehen, dass zwischen dem elektrischen System und dem Verhalten der ganzen Maschine insbesondere der Spritzmasse physikalische Grund-Gesetzmässigkeiten mitspielen, die sinnvollerweise gar nicht richtig über nachträgliche Fehler-Korrektur-Programme berücksichtigt werden können. Der Erfinder erkannte, dass das System der elektrisch angetriebenen Einspritzschnecke folgende Eigenheiten hat:

-- Die Kunststoffmasse ist bei einem Druck bis über 2000 bar ein elastischer Stoff, der gleich einer Feder, mehr als 20 % komprimierbar ist. Noch schlimmer wirkt sich die Tatsache aus, dass die ganze Kunststoffmasse in der Form und im Einspritzzylinder sich elastisch verhält, so dass die Einspritzschnecke im Einspritzzylinder bedingt durch die Elastizität zum Beispiel bis zu mehreren cm Hub machen kann. Die genaue Lage der Einspritzschnecke ist unter anderem abhängig von dem momentanen Druck in der Kunststoffmasse. Der Druck ändert sich, wenn das System schwingt. Es wurde erkannt, dass die Lösungen des Standes der Technik mit einer Schwingungsfrequenz von etwa 2,5 Hz auf Drehmoment- beziehungsweise Spritzdrucksollwert-Änderungen reagieren. Dieses Verhalten stellt einen wesentlichen Problemkreis dar und erschwert das schnelle und genaue Regeln des Spritzdruckes.

-- Die mechanische Übersetzung von dem Servomotor auf die Einspritzschnecke kann demgegenüber als starrer inkompressibler Körper angenommen werden, der nur dem mechanisch/geometrischen Wechselspiel folgt.

-- Der Rotor und der mechanische Übertrieb sind reale Massen, die der Massenträgheit unterworfen sind, wobei insbesondere der Rotor an sich eine relativ kleine Masse darstellt, jedoch in der dynamischen Betrachtung eine Hauptträgheit verkörpert.

-- Erfolgt die Steuerung der Einspritzschnecke über die Veränderung des Antriebsmomentes des Servomotores, so kann dies nur auf dem Gesetz: Masse $\times$ Beschleunigung geschehen, resp. der Gleichung $W = {}^{mv}$ (W = Energie, v = Geschwindigkeit, m = Masse). Eine Geschwindigkeitsänderung der Masse bzw. eine grosse Beschleunigung bedingt eine entsprechende Kraft. Das Aufbringen einer Kraft auf die mechanischen Teile (über das Motordrehmoment) bewirkt nicht nur eine Kraft bzw. einen Druck auf die Spritzgiessmaschine, sondern überdies auch starke, und im Zusammenwirken mit anderen Faktoren wie Reibung usw., unkontrollierbare Schwingungen. Die Frequenz der Schwingung ist aber nicht im voraus berechenbar, da diese von der wirksamen Menge der Einspritzmasse abhängt, von den speziellen Werkzeugen, der Qualität des Kunststoffes, der Temperatur beziehungsweise der Zeit, usw.

-- Weil letztlich die Funktionseinheit des Einspritzsystems mit der Form sowie den Formhalte-Elementen der Spritzgiessmaschine als ganzes ein ausgeprägtes Schwingsystem darstellen, ist der Ansatz der Systemführung über eine Steuerung oder Regelung basierend auf dem Antriebs-Drehmoment falsch.

An sich ist es bekannt, dass bei Servomotoren, insbesondere bei den vorzugsweise gewählten, bürstenlosen Servomotoren zum Beispiel vom Typ der "Electronically commutated brushless motor" Marke "Fastact" die Lage des Rotores in einem sehr hohen Grad beherrschbar ist. Diese Drive- bzw. Motortypen zeichnen sich durch eine hochdynamische, steife Geschwindigkeitsregelung bzw. Lageregelung aus. Der Rotor kann deshalb gleichsam in Kombination mit dem Drive als ein in das Magnetfeld eingespannter Körper angenommen werden, der wegen seiner an sich relativ kleinen Masse und den unverhältnismässig grossen zur Verfügung stehenden elektromagnetischen Kräften nahezu gleichzeitig dem Magnetfeld folgend betrachtet werden. Magnetfeld und Lage des Rotors können mit extrem hoher Sequenz beziehungsweise einem entsprechenden Wechselspiel gesteuert werden, so dass tieffrequente Schwingungen des Systems mit der neuen Erfindung unterdrückt werden. Signaländerungen können mit einer Frequenz bis über 100 Hertz erfolgen. Es lässt sich einer vorgegebenen Sollkurve schnell und präzise folgen. Der ganze entsprechende Prozessverlauf ist über eine nahezu wirkliche Beherrschung der Bewegung nahezu vollkommen steuerbar und/- oder regelbar. Es werden anstelle von wechselnden Kraftimpulsen auf eine Masse direkt Bewegungsimpulse auf die mechanischen Teile gegeben, die nun die viel tieffrequenteren Schwingungen des Systems ausschalten können. Damit können die bisher verwendeten letzlich unkontrollierbaren Fehlerkorrekturen mit aufwendigen Fehlerregistern weggelassen werden. Wichtig bei der neuen Erfindung ist eine genügende Drehmomentreserve die eine echte Beherrschung sowohl der Position beziehungsweise des Hubweges wie auch der Geschwindigkeit erlaubt.

Es zeigt sich, dass bei der Druck- und/oder Lageregelung im Grosssignalbereich mit einer parabelförmigen Abhängigkeit der Geschwindigkeit von der Sollwegdifferenz eine (zeit)optimale Verfahrfunktion erreicht werden kann. Mit anderen Worten muss die Soll-/Ist-Abweichung beim Regler erfindungsgemäss parabelartig auf die Geschwindigkeitsstellgrösse einwirken und nicht linear wie bei herkömmlichen Reglern. Der entsprechende Unterschied lässt sich leicht anhand eines Oszilograms des Geschwindigkeitsverlaufes aufzeigen. Im Stand der Technik ist das Einschwingen bei einem Sollwertsprung exponentiell. Gemäss der neuen Erfindung erscheint bei Druck-Sollwert-Sprüngen grösstenteils ein linearer Verlauf der Geschwindigkeit über der Zeit mit relativ hohen Gradienten. Die Soll-Ist-Differenz der Lageabweichung vom Zielpunkt wird in der Erfindung in parabolischer Form verstärkt und zum Beispiel als Geschwindigkeitsstellgrösse an den entsprechenden Drive gesandt. Es hat sich ferner gezeigt und lässt sich unter gewissen Randbedingungen auch experimentiell belegen, dass bei der Druckregelung das Analoge gilt, falls man hingeht und das Sollweg-Signal mit dem Solldruck-Signal und entsprechend die Ist-Signale vertauscht. Die Begründung liegt in der Tatsache, dass im statischen Fall ein umittelbarer linearer Zusammenhang zwischen Wegdifferenz und entsprechender Druckdifferenz besteht. Bei einer 1000 kN IMM beträgt die statische Systemdruckverstärkung ca. 200 (bar/mm) im vorderen Schneckenbebereich und vermindert sich auf ca. 1/3 dieses Wertes im hinteren Bereich.

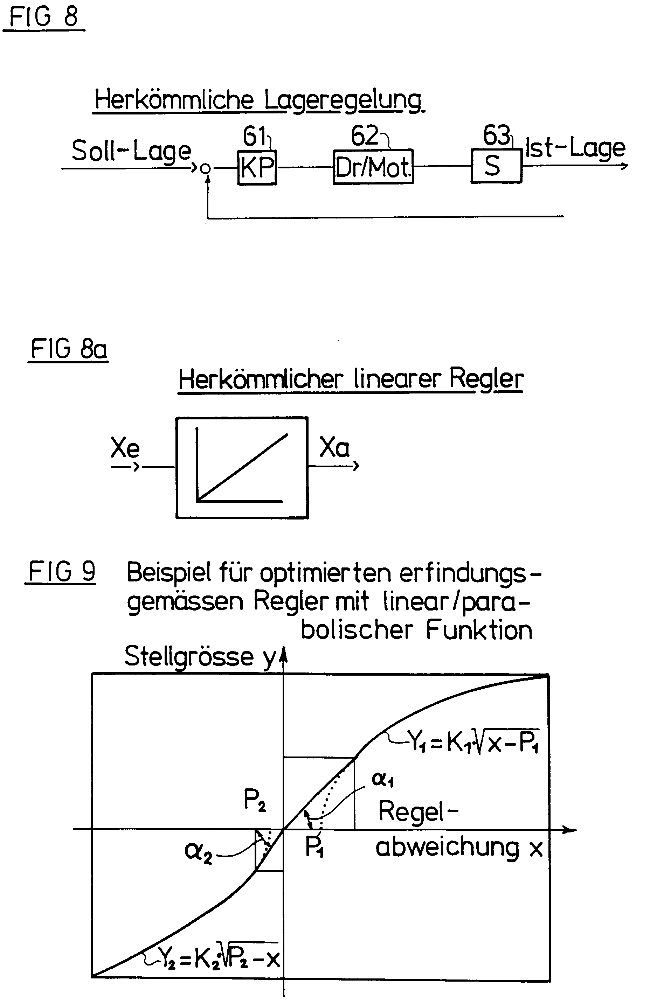

Damit für die Lage- und Druckregelung die gleichen Parameter verwendet werden können, wird die Druckdifferenz bevorzugt mit einem Skalierfaktor angepasst (Kp). Ferner kann vor allem im Grosssignalbereich zur Optimierung des Spritzvorganges ein Verstärkungsfaktor (K1 bzw. K2, Figur 9) unsymetrisch ausgeführt werden, um von der höheren Winkelverzögerung unter Last, Nutzen zu ziehen.

Bei einer vorteilhaften Ausgestaltung werden zusätzlich Druckgrenzwerte bzw. Drucksollwerte über der Zeit und/oder über dem Weg vorgegeben, wobei der Druck-Ist-Wert oder ein dazu korrelierender Wert gemessen und zur Regelung zugezogen beziehungsweise zu dessen Korrektur verwendet wird. Weiter wird vorgeschlagen dass während der Spritzphase insbesondere während der Füllphase die Spritzgeschwindigkeit als weitere Zielgrösse geregelt bzw. begrenzt wird. Vorteilhafterweise wird der Sollwert für wenigstens einen der Zielgrössen als Konstantwert oder in Funktion von Zeit bzw. Weg vorgegeben. Bevorzugt werden die Zielgrössen vorzugsweise mittels digitalen Rechnern (in software) kaskadenartig geregelt bzw. begrenzt werden. Gemäss einem weiteren Ausgestaltungegedanken wird während der Einspritzphase der Volumen- bzw. der Massestrom ($\dot{m}$) des durch die Angussdüse strömenden Kunststoffes als Zielgrösse geregelt bzw. begrenzt, und insbesondere aus den ermittelten Werten: Druckgradient, Schneckengeschwindigkeit und -Position sowie Schneckendurchmesser, Materialkonstanten (aus pVT-Diagramm) usw. berechnet wird. Ferner kann die axiale Verschiebekraft auf die Einspritzschnecke gemessen, mit einem Soll-Kraftverlauf über der Zeit und/oder über dem Weg verglichen und zur Korrektur des Geschwindigkeitssignales verwendet werden. Ganz besonders vorteilhaft ist es, die Abweichungen des tatsächlichen Druck- und/oder Kraftverlaufes in Bezug auf einen vorgegebenen Geschwindigkeitsverlauf erfasst und über einen digitalen Regler kontrolliert bzw. korrigiert werden. Dabei kann der Druck- beziehungsweise Kraftregelung eine Hub-Wegregelung überlagert werden, insbesondere zur Vermeidung von Kollisionen mit mechanischen Hubgrenzen.

Ein weiterer vorteilhafter Ausgestaltungsgedanke ist dadurch gekennzeichnet, dass mittels einer Störgrössenaufschaltung der Massenstrom ($\dot{m}$) durch die Angussdüse als Funktion der Druckregelung überlagert bzw. aufgeschaltet wird, zur grösstmöglichen Annäherung des Spritzdruckes an den Sollwert auch bei höheren Spritzgeschwindigkeiten.

Gemäss einer weiteren Ausführungsform wird wenigstens eine weitere Achse der Spritzgiessmaschine zum Beispiel der Formschluss und/oder der Auswerfer und/oder der Kernzug bzw. die Kernzüge und/oder die Einspritzaggregatverschiebung geregelt bzw. begrenzt. Der Spritzgiessmaschine wird vorteilhafterweise ein Rechner sowie ein Speicher für die Sollmodulation zugeordnet, für die Lageänderung eines resultierenden Magnetfeldes sowie eine entsprechende Steuereinheit für den Drive, welcher vorzugsweise als Synchronmotor ausgebildet ist. Es hat sich gezeigt, dass in sehr vielen Anwendungsfällen die oben beschriebenen Steuerungs- und Regelungskonzepte einzeln oder in besonderen Kombinationen für andere Bereiche der Spritzgiessmaschine anwendbar sind. Insbesondere wird dazu vorgeschlagen, dass wenigstens ein Sensor zur Erfassung des Druckes für die Kunststoffmasse und/oder der Kraft und/oder des Stromes des betreffenden Antriebsmotores an der Verschiebemechanik der Spritzachse und/oder an der Schliessachse und/oder der Auswerfachse und/oder an der Spritzaggregatachse angeordnet ist. Ferner wird vorgeschlagen, dass in dem Bereich der Bewegungsachsen zum Beispiel der Einspritzachse wenigstens ein Kraft- und/oder Wegsensor angeordnet ist, wobei vorzugsweise der Steuerung wenigstens ein Regler zugeordnet ist, für die Überlagerung einer Druck und/oder Kraft- und/oder Wegerelung, welche zumindest beim Erreichen von vorbestimmten Grenzwerten automatisch zuschaltbar ausgebildet sind. Besonders vorteilhaft ist es jedoch, wenn in einem von der Maschinensteuerung getrennten Speicher zum Beispiel in der Form von einem PC, alle Grunddaten in der Art von Rezepten für die einzelnen Produkte gespeichert werden und die Maschinensteuerung als Steuergrunddaten beziehungsweise als ganzes Rezept übergeben werden. Bevorzugt weist die Spritzgiessmaschine eine Steuerelektronik auf, wobei der jeweilige Servomotor von der Steuerelektronik über einen Geschwindigkeitseingang sowie einer Motorstellungsrückführung, oder einem Eingang für die Position beziehungsweise ein Positionsprofil, steuerbar ist. Vorzugsweise weist der Antrieb einen elektrischen Servomotor (einen bürstenlosen Servomotor, zum Beispiel vom Typ der "Electronically commutated brushless motor" Marke "Fastact") oder einem geregelten Asynchronmotor (zum Beispiel Kurzschlussläufer) oder einen geregelten Gleichstrommotor auf.

Es ist ferner möglich, die dargestellten, erfindungsgemässen Lösungen auch bei Druckgiessmaschinen anzuwenden, vorausgesetzt, dass das System mit der an sich inkompressiblen Metallschmelze durch Anbringen eines echt federnden bzw. elastischen Gliedes zum Beispiel einer Druckfeder zwischen dem Antrieb und den beweglichen Einspritzelementen zu einem analogen Systemverhalten überführt wird, wie bei Spritz-Giessmaschinen.

Die Erfindung wird nun an Hand einiger Ausführungsbeispiele mit weiteren Einzelheiten erläutert.

## Kurze Beschreibung der Erfindung

Es zeigen:

die Figur 1
schematisch die zentralen Funktionselemente der neuen Erfindung einer Spritzgiessmaschine;
die Figur 2
vereinfacht den prinzipiellen Verlauf des Druckes in Funktion der Zeit;
die Figur 2a
entsprechend vereinfacht den Druck in Funktion des Weges über einen ganzen Spritzzyklus;
die Figur 3
der tatsächliche Druck- beziehungsweise Geschwindigkeitsverlauf gemäss dem Stand der Technik;
die Figur 3a
ein Drucksollwertsprung mit linearem Druckregler;
die Figur 4
den tatsächlichen Druck- bzw. Geschwindigkeitsverlauf gemessen an einer erfindungsgemäss ausgerüsteten Spritzgiessmaschine;
die Figur 4a
einen Vergleich der statischen Druck-Wegkennlinie mit linearem und nicht linearem Regler;
die Figur 5
eine vollständige Spritzgiessmaschine;
die Figur 6
die Anwendung der Erfindung bei einer Druckgiessmaschine;
die Figur 7
schematisch ein vollständiges Steuerkonzept für die ganze Maschine;
die Figur 8
eine herkömmliche Lageregelung des Standes der Technik;
die Figur 8a
die Darstellung der zugehörigen linearen Funktion zu Figur 8;
die Figur 9
ein Beispiel der Erfindung mit einer optimierten linear/parabolischen Funktion;
die Figur 10, 10a und 10 b
verschiedene Ausbaustufen der Erfindung mit einem linear/parabolischen Regler.
die Figur 11
schematisch vereinfacht eine Steuerung für drei Achsen;
die Figur 12
figürlich und vereinfacht die Grundelemente für eine ganze Maschine.

## Wege zur Ausführung der Erfindung

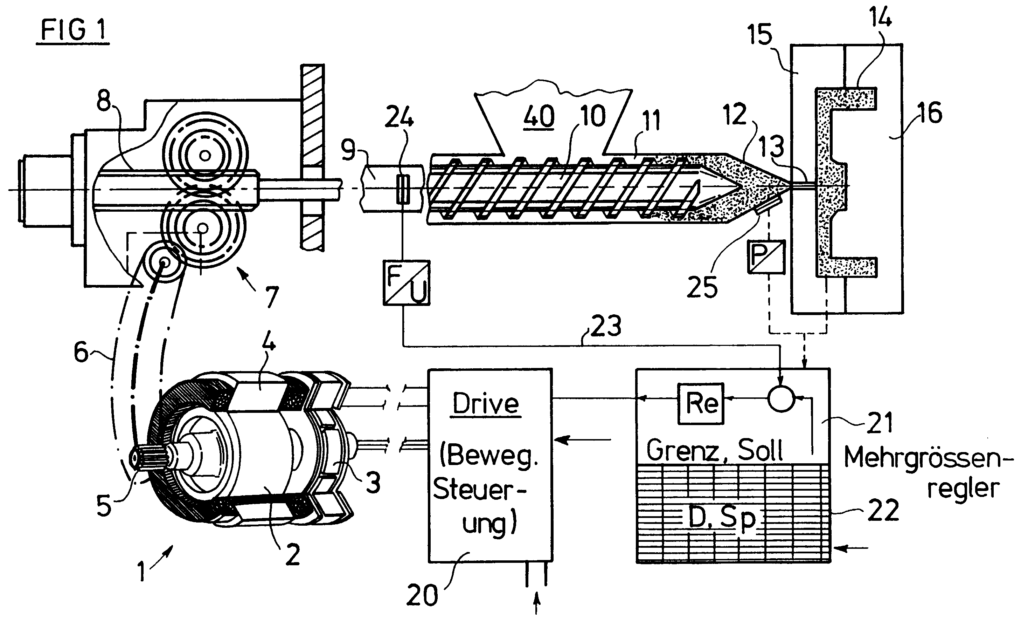

In der Folge wird nun auf die Figur 1 Bezug genommen. Ein Antriebsmotor 1 weist einen Rotor 2 mit Permanentmagnet sowie einem Positionssensor 3 auf. Der Stator 4 weist mehrere, meistens drei, Wicklungen sowie einen Inverter auf. Über ein Abtriebsritzel 5, das fest auf der Welle des Rotores 2 aufgekeilt ist, wird über einen Übertrieb 6, welcher zum Beispiel ein Zahlriemen, bevorzugt jedoch ein Zahnradübertrieb ist, ein eigentliches Übersetzungsgetriebe 7 angetrieben. Das Übersetzungsgetriebe 7 formt die Rotationsbewegung des motorischen Antriebes in eine Linearbewegung, welche direkt auf eine Zahnstange 8 aufgebracht wird. Die Zahnstange ist kraftschlüssig verbunden mit der Schneckenwelle 9, so dass die entsprechende Rotationsbewegung des Rotors 2 umittelbar in eine Linearbewegung der Plastifizierschnecke 10 umgeformt wird und die vom Spritzgiessprozess verlangte Bewegung durchführt. Die gezeichnete Stellung der Plastifizierschnecke 10 in dem Spritzzylinder 11 ist etwa am Ende der Füllphase, so dass sich noch eine beachtliche Menge von Spritzmaterial 12 in dem Spritzzylinder 11 befindet, welches nun über die Einspritzdüse 13 noch in die Kavität 14 der beiden Formhälften 15 resp. 16 gepresst wird. Der beschriebene Ablauf wird über die Steuerung der Lageänderung des resultierenden Magentfeldes resp. die entsprechende Steuerung der Bewegung des Rotors 2 von einem Drive 20 durchgeführt. Alle erforderlichen Steuersignale an den Drives 20 werden von einer vorzugsweise hardwaremässig getrennt angeordneten elektronischen Steuerung 21 aufbereitet und zugeführt. Dazu weist die elektronische Steuerung 21 einen Datenspeicher oder Rezeptspeicher 22 auf, von dem je ein erforderliches Grundrezept der für den Spritzgiessablauf vorbestimmten Geschwindigkeits- und Druck-Sollwerten der Bewegungsablauf moduliert und damit der gewünschte Geschwindigkeits- und Druckverlauf erzeugt wird. Die elektronische Steuerung 21 ist vorzugsweise als Mehrgrössenregler ausgebildet. Mit den beschriebenen Grundfunktionen kann ein ganzer Spritzgiessvorgang beherrscht werden. Einerseits für neue noch nicht bekannte Formen oder Materialien, und auch als Sicherung bei Materialqualitätsänderungen ist es vorteilhaft, zusätzliche Prozessparameter laufend über entsprechende Sensoren aufzunehmen. So ist es sehr vorteilhaft über einen Kraftsensor 24 die axiale Kraft in der Schneckenwelle 9 während dem ganzen Spritzvorgang zu erfassen und über eine Signalleitung 23, welche ein Busübertragungssystem sein kann, der elektronischen Steuerung zu übermitteln, so dass zum Beispiel beim Überschreiten von Grenzwerten sofort ein Korrekturbefehl über die Bewegungssteuerung abgegeben wird. Eine weitere Möglichkeit ist die unmittelbare Druckerfassung über einen Drucksensor 5, welches Signal ebenfalls zur Bewegungsführung in der elektronischen Steuerung 21 verwendbar ist.

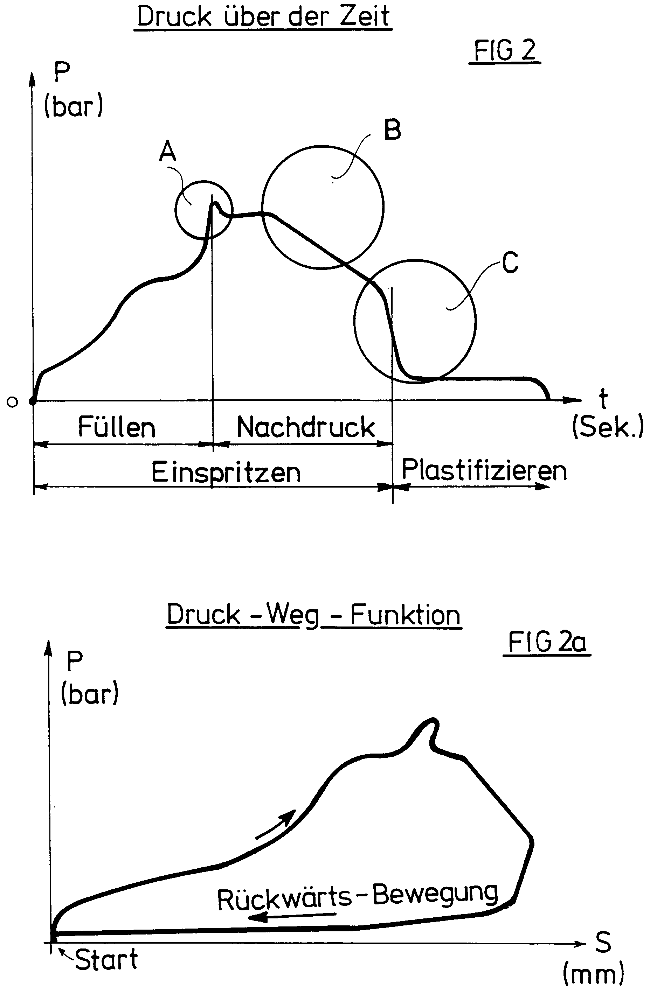

In der Figur 2 ist der Druckverlauf über einen ganzen Spritzzyklus dargestellt. Dabei sind speziell die kritischen Übergänge markiert. A bezeichnet den Übergang von der Füll-Phase in die Nachdruckphase. B markiert die Überleitung der Nachdruckphase in die Plastifizierphase sowie C den eigentlichen Übergang in die Plastifizierung. Die Figur 2a zeigt die Druck-Weg-Funktion des linearen Bewegungsablaufes für die Plastifizierschnecke 10. Die Bewegung beginnt bei einem Start und endet am selben Start und ist damit bereit für den folgenden Zyklus.

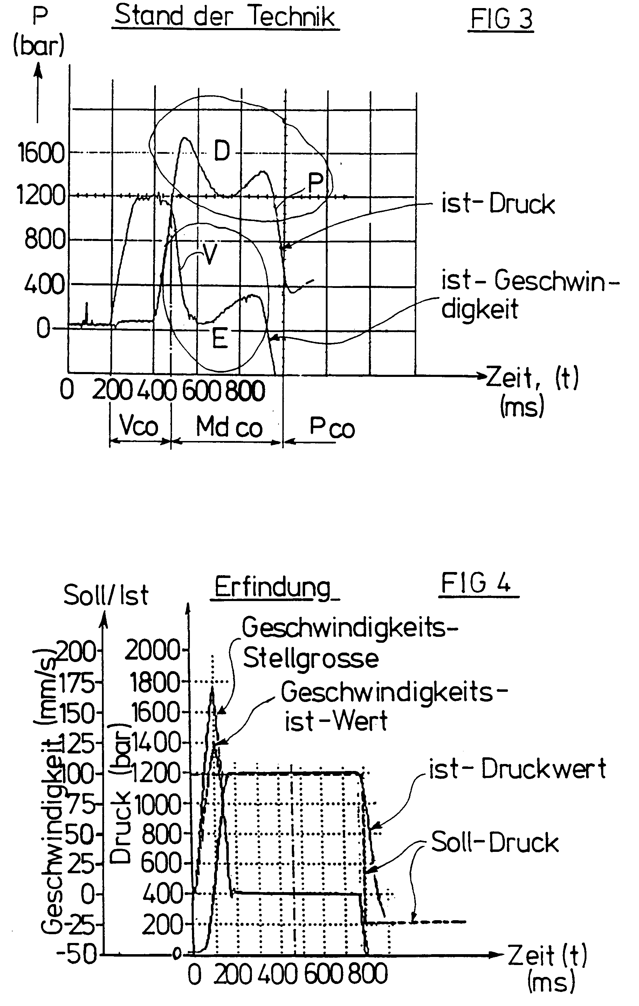

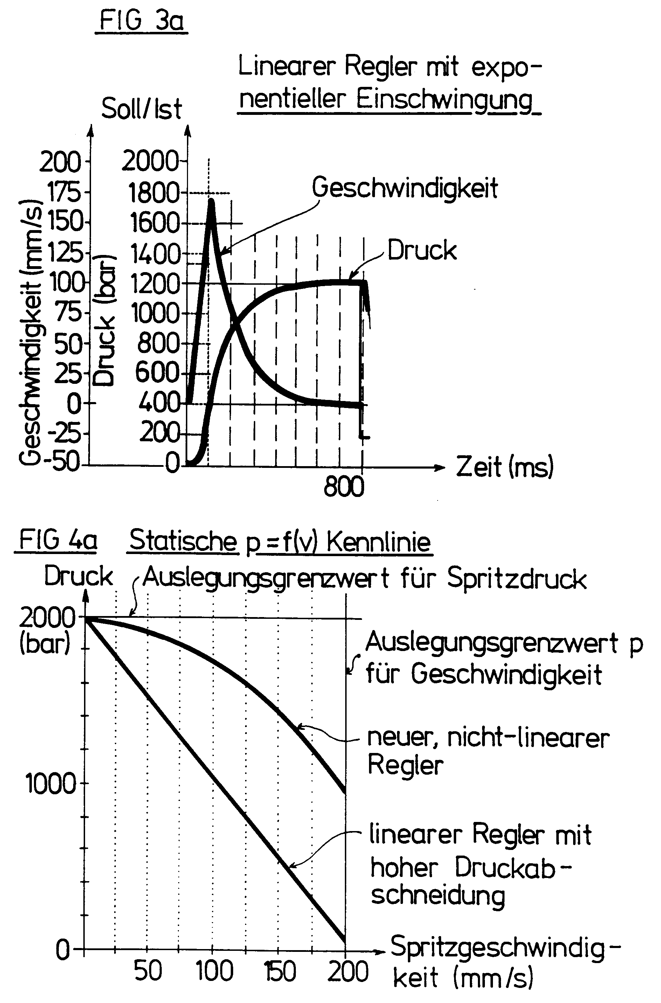

Die Figur 3 zeigt das Schwingverhalten im Stand der Technik. Im Stand der Technik wird die erste Phase, die Füllphase, geschwindigkeitsgeführt (Vco) und die zweite, die Nachdruckphase, druck- resp. drehmoment-(Mdco) kontrolliert. Das Letztere bei den bisher bekannten, elektrischen Antrieben für Spritzgiessmaschinen. Die an sich unkritische Füllphase ergibt über eine reine Geschwindigkeitsführung gute Ergebnisse. Dagegen bildet sich im Bereich des Nachdruckes wie mit den Umkreisungen D für die Druckkurve resp. E für die Geschwindigkeitskurve markiert ist, eine sehr nachteilige Schwingbewegung mit einer halben Wellenlänge von etwa 200 Millisekunden. Die Figur 3a gibt typische Messkurven wieder für den Druck und die Geschwindigkeit. Basierend auf einem linearen Regler ergibt sich ein sehr nachteiliges exponentielles Einschwingen bei einem Sollwert-Sprung.

Die Figur 4 zeigt demgegenüber ein Beispiel der neuen Erfindung. Der Ist-Wert folgt beinahe ideal dem vorgegebenen Sollwert und ergibt einen im wesentlichen linearen Geschwindigkeits-Verlauf sowie sehr scharfe Übergänge von einer Phase in die folgende. Es tritt überhaupt keine Schwingbewegung auf. Damit aber konnte nicht nur die dem System eigene Schwingung von ca. 2 1/2 Hertz sondern auch der zentrale Nachteil des Standes der Technik sichtbar gemacht werden. Im Stand der Technik musste über viel Korrekturregelungen bzw. Korrektursteuerungen gegen die unakzeptablen Störgrössen während der entscheidenen Phase des Spritzvorganges so gut wie möglich angekämpft werden. Aus der Figur 4 kommt ferner deutlich zum Ausdruck, dass bei Steuerung der Bewegung an sich, die vorhandene Schwingbewegung unterdrückt wird und sich eine grosse Stabilität sowohl des Druck- wie des Geschwindigkeitsverlaufes einstellt. Alle Versuche mit der neuen Erfindung haben gezeigt, dass bei Steuerung der Bewegung die entsprechenden Schwingungen sich gar nicht einstellen und ein Idealverlauf entsprechend der geforderten Zielgrössen-Funktion erzeugbar ist. Es ergibt sich bei der Drucksprungantwort ein nahezu idealer linear-Verlauf der Ist-Geschwindigkeit. Die Figur 4a zeigt eine Gegenüberstellung der statischen Druck-Weg-Kennlinie. Dabei kommt sehr anschaulich zum Ausdruck, dass bei einem neuen, nicht-linearen Regler viel näher an die Auslegungsgrenzwerte heran gefahren werden kann.

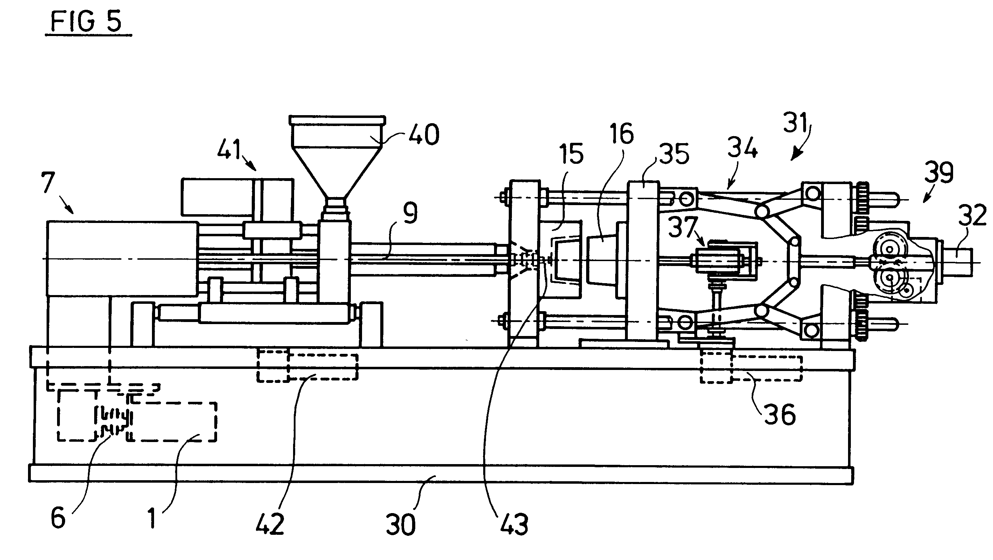

In der Figur 5 ist eine ganze Spritzgiessmaschine auf einem Maschinenständer 30 mit einer Formschliesseinrichtung 31, welche über einen Rotor 32 sowie einer Übersetzung 33 und ein Doppelkniegelenk 34 eine bewegbare Grundlatte 35 mit der Formhälfte 16 vor und nach jedem in die entsprechende Offenbeziehungsweise Schliessstellung bringt. Ein weiterer Antrieb 36 betätigt einen Auswerfer 37. Das Kunststoffrohmaterial wird über einen Speisetrichter 40 zugeführt. Die Rotationsbewegung der Plastifizierschnecke 9 wird über einen Antriebsmotor 41 mit entsprechendem Übertrieb erzeugt. Eine weitere Achse 42 ist für den Antrieb des Einspritzaggergates vorgesehen. Die Angussdüse ist mit dem Bezugszeichen 43 versehen.

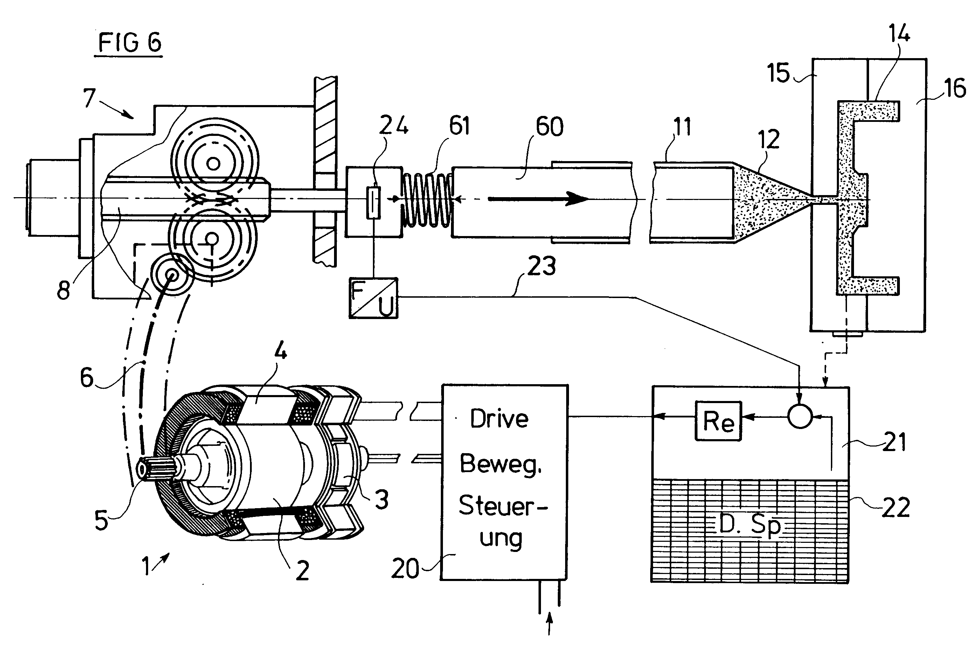

Die Figur 6 zeigt einen analogen Aufbau wie die Figur 1. Die übereinstimmenden Merkmale sind mit den selben Bezugsziffern bezeichnet, wobei es sich hier jedoch um eine Druckgiessmaschine handelt. Bei der Druckgiessmaschine werden mehrheitlich metallische Grundstoffe wie Aluminuium usw. verarbeitet. Im Unterschied zu dem Kunststoff bei Spritzgiessmaschinen ist aber Metall auch in flüssiger Form nahezu nicht komprimierbar. Es hat sich gezeigt, dass abgesehen von den spezifischen Werten der einzelnen Rezepte die neue Erfindung sehr vorteilhaft auch bei Druckgiessmaschinen anwendbar ist, vorausgesetzt, dass rein baulich zwischen dem Antrieb 7 sowie einem Spritzgiesskolben 60 eine Druckfeder 61 angeordnet wird, welche die Funktion des federelastischen Verhaltens der Kunststoffmasse verkörpert.

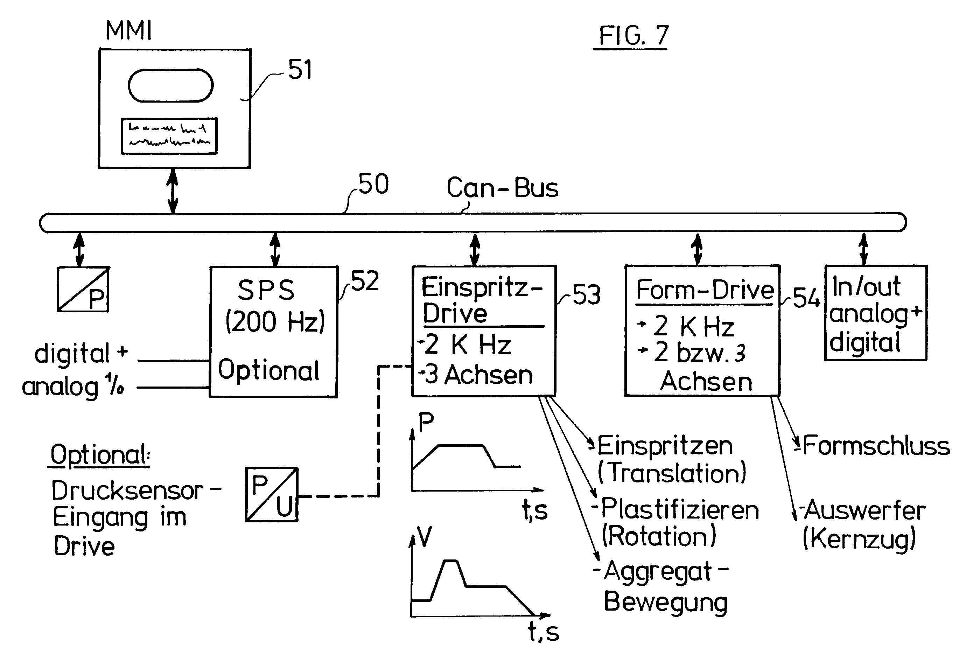

Die Figur 7 zeigt ein ganze besonders vorteilhafte Ausgestaltung einer Gesamtsteuerung wobei die Kommunikation über einen Feldbus 50 erfolgt. Alle Programme können dabei in einem Rechner-Speicher zum Beispiel in einem PC 51 abgelegt sein und form- beziehungsweise materialspezifisch für den jeweiligen Arbeitsauftrag beziehungsweise der Herstellung einer bestimmten Anzahl gleicher Teile als Rezepte zum Beispiel einer SPS 52 überspielt und gegebenenfalls von dort aus über den Feldbus 50 alle übrigen Sensorsignale koordiniert beziehungsweise alle Arbeitssignale abgegeben werden. In der Figur 7 sind je zwei Mehrachsendrive 53, 54 als Hardwareeinheit zusammengefasst. Der Einspritzdrive 53 koordiniert die drei Achsen für Einspritzen (Translation), Plastifizieren (Rotation) sowie die Aggregatbewegung. Beim Formdrive 54 sind zwei bzw. drei Achsen aufgeführt: Formschluss sowie der Auswerfer (Kernzug). Andere Kombinationen sind auch möglich.

Die Figur 8 zeigt einen herkömmlichen, bekannten Lageregler, in Figur 8a mit linearer Regelfunktion.

61: Herkömmlicher (Proportional-)Regler
62: Unterlagerter Drive/Motor-Geschwindigkeitsregler
63: Mechanischer Integrator der Motordrehzahl zum Lage-Istwert

Bei der klassischen Regelungstechnik geht man von einem linearen Verhalten der Komponenten (Strecke und zugehörige Regler) aus. Dabei wird, aufbauend auf dem unterlagerten Geschwindigkeitsregler im Drive, die übergeordnete Lageregelung als lineare Rückführung der Soll/Istabweichung ausgebildet.

Die Figur 9 zeigt den Funktionsverlauf eines Linear-Parabolischen Reglers. Damit im Kleinsignalbereich die hohe Verstärkung nicht zu Instabilitäten führt, wurde die Parabel im Bereich nahe der Sollposition durch eine herkömmliche lineare Funktion ersetzt. Es zeigt sich, dass bei der Lageregelung im Grosssignalbereich mit einer parabelförmigen Abhängigkeit der Geschwindigkeit von der Sollwegdifferenz eine (zeit)optimale Verfahrfunktion erreicht werden kann. Mit anderen Worten wirken die Soll/Istabweichungen beim neuen Regler vor allem parabelartig auf die Geschwindigkeits- Stellgrösse ein und nicht nur linear, wie bei herkömmlichen Reglern.

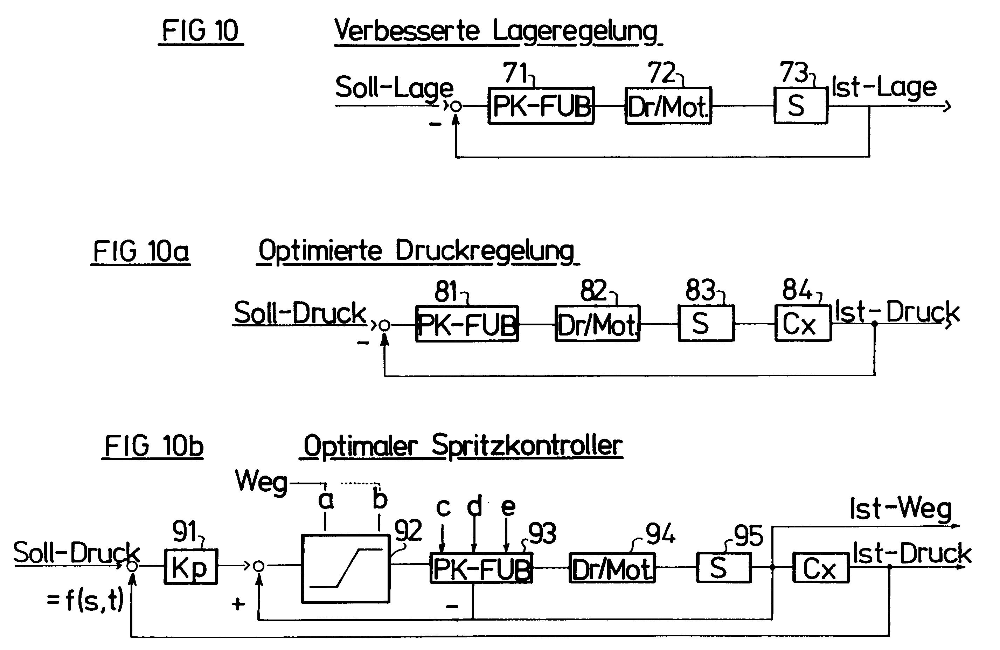

Die Figur 10 zeigt eine erfindungsgemäss, verbesserte Lageregelung, dabei sind:

71: Positionskontroll-Funktionsbaustein
72: Unterlagerter Drive/Motor-Geschwindigkeitsregler
73: Mechanischer Integrator der Motordrehzahl zum Lageistwert

Mit der zeit- bzw. beschleunigungs-optimierten Annäherung an den Zielpunkt, beinhaltet der PK-FUB auch die Vorgabe der maximalen Beschleunigungs- und Verzögerungswerte, als auch den Wert für die erlaubte und anzustrebende Verfahrgeschwindigkeit, die nicht überschritten werden dürfen. Die Figur 10a zeigt eine optimierte Druckregelung dabei bedeuten:

81: Positionskontroll-Funktionsbaustein
82: Unterlagerter Drive/Motor-Geschwindigkeitsregler
83: Mechanischer Integrator der Motordrehzahl zum Lageistwert
84. Statische Systemdruckverstärkung (bar/m)

Erfindungsgemäss zeigt sich, bzw. lässt sich heute unter gewissen Randbedingungen auch mathematisch belegen, dass bei der Druckregelung das Analoge gilt, falls man hingeht und das Sollwegsignal mit dem Solldrucksignal und entsprechend die Istsignale vertauscht. Die Begründung liegt in der Tatsache, dass im statischen Fall ein unmittelbarer, linearer Zusammenhang zwischen Wegdifferenz und entsprechender Druckdifferenz besteht. Bei einer 1000 kN IMM beträgt die statische Systemdruckverstärkung ca. 200 (bar/mm) im vorderen Schneckenbereich und vermindert sich auf ca. 1/3 dieses Wertes im hinteren Bereich. Damit für die Lage- und Druckregelung die gleichen Parameter verwendet werden können, muss die Druckdifferenz mit einem Skalierfaktor angepasst werden (Kp).

Beim Spritzvorgang wird im allgemeinen Fall sowohl der Druck, als auch die Geschwindigkeit, vorgegeben. In der ersten Phase liegt die Priorität vielfach in der Geschwindigkeitskontrolle und später in der Druckvorgabe. Im weiteren muss in der Software des Einspritzkontrollers dafür gesorgt werden, dass die Endlagen nicht überfahren werden, das heisst, diese dürfen im Normalfall nicht berührt werden. Keinesfalls darf mit hoher Geschwindigkeit in die mechanischen Begrenzungen gefahren werden. Folgende Anforderungen stellen sich somit an den Spritzkontroller:

- Beherrschen der vorgegebenen (Maximal-)Beschleunigung und Verzögerung
- Beherrschen der (maximalen-) Spritzgeschwindigkeit = f (s,t)
- Beherrschen des (Maximal-)Spritzdruckes = f (s,t)
- Beherrschen des (Minimal/Maximal-) Weges → maschinentypisch

Die Figur 10 b zeigt einen auf noch höhere Stufe optimierten Spritzkontroller dabei bedeuten:

91: Anpassung der Druckregelverstärkung
92: Positions(überlauf)begrenzungen
93: Positionskontroll-Funktionsbaustein
94: Unterlagerter Drive/Motor-Geschwindigkeitsregler mit unterlagertem Stromregler
95: Mech. Integrator der Motordrehzahl zum Lageistwert
96: Statische Systemdruckverstärkung (bar/m)
a: Maximalwegbegrenzung
b: Minimalwegbegrenzung
c: Sollbeschleunigung
d: Sollverzögerung
e: Sollspritzgeschwindigkeit = f(s,t)

Der optimierte Spritzkontroller lässt sich für spezifische Aufgaben noch weiter verbessern. So kann vor allem im Gross-Signalbereich als weitere Optimierung die Verstärkung Kp bzw. Kz unsymetrisch ausgeführt werden, um von der höheren Winkelverzögerung unter Last Nutzen zu ziehen.

Ferner kann auch noch eine (teilweise) quadratische Störgrössenaufschaltung der Istgeschwindigkeit oder bevorzugt des Massenstromes aus der Angussdüse 43 auf den Solldruck gewählt werden um die Druck-Geschwindigketis-Kennlinie (Druckabschneidecharakteristik) weiter zu optimieren. Weiter muss im allgemeinen ein nicht-linearer Zusammengang zwischen Motorwinkel und Schneckenposition bei der Sollwert und der Regelparameterbestimmung berücksichtigt werden.

Gemäss einer weiteren sehr vorteilhaften Ausgestaltung kann mittels einer Störgrössenaufschaltung der Massenstrom ($\dot{m}$) durch die Angussdüse als Funktion der Druckregelung überlagert bzw. aufgeschaltet wird, zur grösstmöglichen Annäherung des Spritzdruckes an den Sollwert auch bei höheren Spritzgeschwindigkeiten. Es kann zum Beispiel dem Drucksollwert eine Störgrössenaufschaltung in der Form:

$$K1 \times V2 - K2 \times p2$$

zur Anwendung komen. Dabei bedeuten K1, K2 abhängige Konstanten, V = Schneckenvorlaufgeschwindigkeit; p = Spritzdruckgradient.

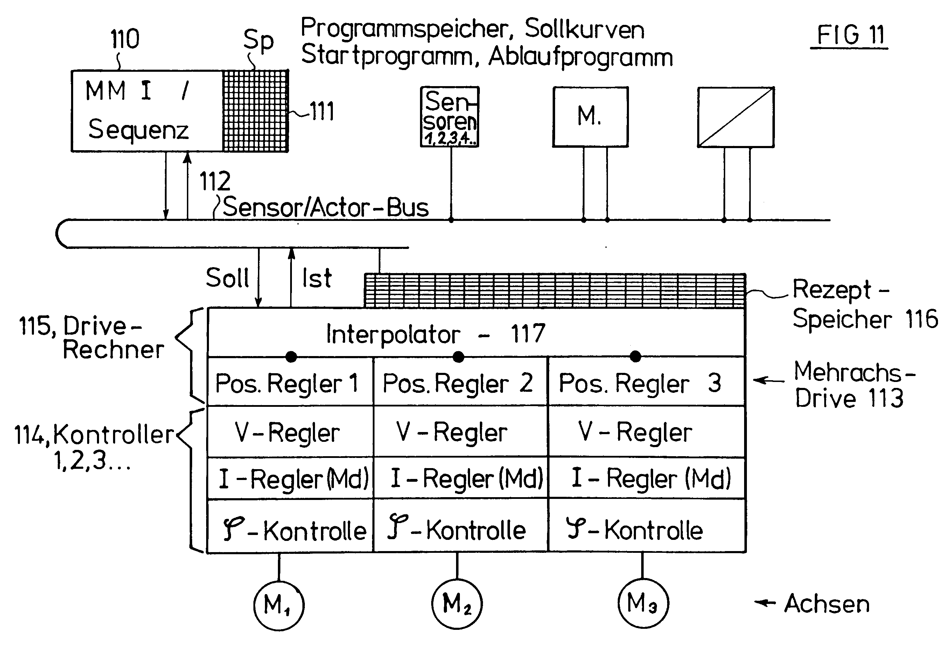

In der Figur 11 ist ein vorteilhaftes Grundschema dargestellt, das besonders die Hauptfunktionselemente für einen Mehrachsendrive darstellt. Die Figur 11 ist gleichzeitig auch ein entsprechender Ausschnitt aus der Figur 7. Ein Maschinenrechner 110 mit einem RechnerDatenspeicher 111 ist über einem Bus bzw. einen einen Sensor/Actor-Bus 112 an einen Mehrfachdrive bzw. Mehrachsdrive 113 verbunden, welcher aus drei Kontrollern 114 (114.1; 114.2; 114.3 usw.), einen Driverechner 115 mit Rezeptspeicher 116 besteht. Der Driverechner 115 besteht aus einem Interpolator 117 und drei Positionsreglen 117.1; 117.2; 117.3, welche eine Funktionseinheit sind, welche die bestmögliche und kürzestmögliche Koordinierung aller Positionsregler gewährleistet. Jeder Kontroller 114 weist je einen eigenen Geschwindigkeitsregler (V-Regler) sowie einen Stromregler (I-Regler) der das Drehmoment regelt, sowie Feld-Kontroller ($\varphi$-Kontrolle) auf, und ist jeweils mit einer Achse resp. dem entsprechenden Motor M1, M2 resp. M3 verbunden. An dem Sensor/Actor-Bus 112 können auch alle notwendigen Signal- oder Steuerverbindungen der Maschine wie Sensoren, Hilfsmotoren usw. angeschlossen werden zum Beispiel gemäss Figur 7. Die direkte Hochgeschwindigkeitsverarbeitung für alle Regelaufgaben findet jedoch direkt in dem Mehrfachdrive 113 statt, auf Grund von Sollwerten Grenzwerten , bzw. einen entsprechendem Rezept, das für jede spezifische Arbeit von dem Rechner-Datenspeicher 111 übergeben wird.

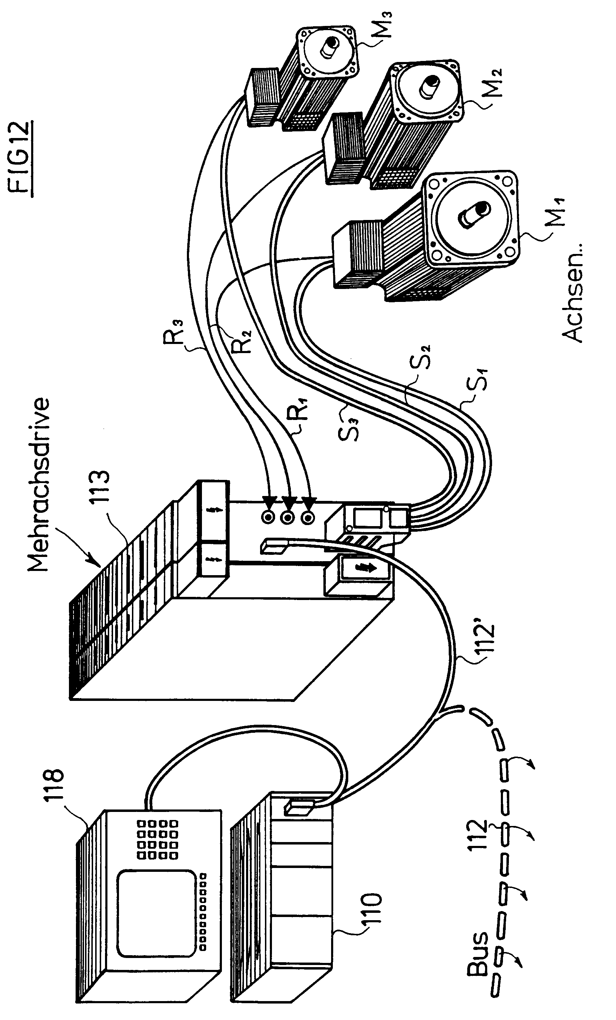

In der Figur 12 ist hardwaremässig ein erfindungsgemässer Mehrfachdrive bzw. Mehrachsdrive mit drei Achsen (M1, M2, M3) sehr vereinfacht dargestellt. Das Herzstück ist der Mehrachsdrive 113, der hier für die gleichzeitig koordinierte Steuerung und Regelung von drei Achsen beziehungsweise drei Motoren ($M_1$, $M_2$, $M_3$) konzipiert ist. Die Datenübertragung kann über eine direkte Leitung 112' oder einen Datenbus 112 wie in der Figur 7 resp. Figur 11 erfolgen, je nach Ausbaugrad, resp. Komlexität der ganzen Steuerung. Die Visualisierung findet in einem Kommandogerät 118 der Maschinensteuerung resp. des Maschinenrechners 110 statt. Grundkomponenten, auf dem die neue Lösung aufgebaut sind ist die Steuerverbindungen ($S_1$, $S_2$, $S_3$) mit dem jeweiligen Motor ($M_1$, $M_2$, $M_3$) sowie die Rückmeldeverbindung ($R_1$, $R_2$, $R_3$) über welche insbesondere die $\varphi$-Kontrolle beziehungsweise die Positions-Istwerte von jeder Achse rückgemeldet werden bzw. worüber die entsprechende interne Regelung stattfindet. Der Mehrachsdrive ist eine Motorsteuerung/Regelung für mehrere Achsen.

Zusammenfassend gestatten die erfindungsgemässen Lösungen einfache, überschaubare und stabile Maschinensteuerungen zu konzipieren,

- aufbauend von der eingentlichen Führung des Spritzvorganges an sich,
- gemäss einem besonders vorteilhaften neuartigen Mehrgrössenregler werden insbesondere die Grundparameter Spritzdruck, Spritzgeschwindigkeit und Wegführung in einer bisher nicht möglichen Art beherrscht.

Als Mehrgrössenregler wird vor allem aber nicht ausschliesslich die Regelung einer Achse bzw. eines Antriebes aber auf mehrere Zielgrössen hin verstanden. Dem Mehrgrössenregler wird (bildlich gesprochen) eine räumliche Hüll-Begrenzungs-Haube bestehend aus den drei genannten Grundparametern für jeden spezifischen Arbeitsauftrag als Rezept vorgegeben. (Der klassische Regler ist demgegenüber gekennzeichnet durch eine strenge Koppelung von Soll und Istwert, wobei er immer aktiv ist und tendiert, diese beiden zur Übereinstimmung zu bringen.) Der Mehrgrössenregler weicht hiervon teilweise grundsätzlich ab. Da wenigstens zwei oder drei Sollwerte oder entsprechende Grenzwerte als Zielgrössen vorgegeben werden, ist im Normalfall jeweils nur eine der Grössen im klassischen Sinne geregelt bzw. begrenzt, während im entsprechenden Zeitpunkt die anderen Reglerteile inaktiv sind. Konkret bedeutet dies, dass zum Beispiel bei Erreichen des maximalen vorgegebenen Druckes (z.Bsp. 2000 bar) die entsprechende Druckregelung das Regelkommando übernimmt, während die beiden anderen inaktiv sind. Das gleiche gilt je für die anderen Parameter. Damit aber lässt sich tatsächlich eine Optimierung aller Grundparameter (Druck, Geschwindigkeit und Weg) mit den entsprechenden elektrischen Antrieben erreichen, da im Falle der Einspritzschneckenregelung für alle drei als Stellgrösse ein Geschwindigkeitssignal für die Axialbewegung der Einspritz-schnecke gewählt wird. Die Maschine als ganzes kann also sowohl z. Bsp. der Spritzvorgang wie die Formschliessung mit einer neuen, einheitlichen Steuerung bzw. Regelungsphilosophie geführt werden, was die Beherrschung des ganzen Prozessablaufes erleichtert und insbesondere eine extem grosse Flexibilität mit höchsten qualitativen Ergebnissen erlaubt. Die ganz besonders kritischen Phasen bzw. Bereiche des Prozesses können zudem mit einer bisher nicht erreichten Stabilität und Reproduzierbarkeit des Produktionsablaufes innerhalb einer sehr kurzen Gesamt-Zykluszeit geführt werden. Besonders vorteilhaft ist ferner die Kombination von Mehrgrössenregelung und Mehrachsdrive.

Gemäss einem weiteren Ausgestaltung ist es ferner möglich, das Geschwindigkeitsstellsignal zu integrieren und als Wegstellsignal (evtl. in Form von Wegsignalen) zur Steuerelektronik (Drive mit integriertem Geschwindigkeits- und Lageregler) gesandt wird.

## Patentansprüche

1. Verfahren zur Steuerung/Regelung des Spritzvorganges in einer Spritzgiessmaschine über ein Steuerungs- und Regelgerät sowie einer Motorelektronik, wobei die Einspritzschnecke motorisch angetrieben und elektromechanisch übersetzt axial bewegt wird, wobei ferner für die Füllphase, die Nachdruckphase und die Plastifizierphase/Staudruckphase als Stellgrösse ein Geschwindigkeitssignal zu der Motorelektronik verwendet wird, das Motorsteuerungs- und Regelgerät einen Eingang von einem Wegsensor und einem Drucksensor aufweist und als Mehrgrössenregler ausgebildet ist, die Geschwindigkeit regelt, mit seiner Stellgrösse den Geschwindigkeitseingang der Motorelektronik ansteuert und für die Druck- und Plastifizierphase als Zielgrössen der Spritzdruck und die Wegbegrenzung als Prozessparamter geregelt werden.

2. Verfahren nach Anspruch 1,
   **dadurch gekennzeichnet**,
   dass die Regelung nicht-linear erfolgt.

3. Verfahren nach Anspruch 1 oder 2,
   **dadurch gekennzeichnet**,
   dass über den Mehrgrössenregler der Spritzdruck, die Spritzgeschwindigkeit und die Wegbegrenzung als Parameter über das Geschwindigkeitssignal zu der Motorelektronik geregelt bzw. begrenzt wird, zur grösstmöglichen Annäherung an die Zielgrössen-Sollwerte, wobei die Parameter für den Mehrgrössenregler eine Art Hüllbegrenzungshaube bilden, während im entsprechenden Zeitpunkt die anderen Reglerteile inaktiv sind.

4. Verfahren zur Führung des Spritzvorganges nach einem der Ansprüche 1 bis 3,
   **dadurch gekennzeichnet**,
   dass im Grosssignalbereich das Geschwindigkeits-Stellsignal zu dem Drive mit einer parabelartigen bzw. einer wurzelartigen Funktion der Druck-Soll-Ist-Abweichung und/oder die Weg-Soll-Ist-Abweichung vorzugsweise mit dem grösstmöglichen Verstärkungsfaktor berechnet wird, zur Annäherung an die grösstmögliche Beschleunigung des Servomotores, besonders vorzugsweise im wesentlichen mit der Formel:

$$\sqrt{|(\text{Psoll - Pist})|} \times kp = \pm \text{ Stg}$$

(Stellgrösse) bzw.

$$\sqrt{|(\text{Ssoll - Sist})|} \times ks = \pm \text{ Stg}.$$

5. Verfahren nach einem der Ansprüche 1 bis 4,
   **dadurch gekennzeichnet**,
   dass vor allem im Grosssignalbereich zur Optimierung des Spritzvorganges, um von der höheren Winkelverzögerung unter Last-Nutzen zu ziehen, der Verstärkungsfaktor (K1 bzw. K2) unsymmetrisch ausgeführt wird, und/oder dass im Kleinst-Signalbereich zur Erreichung der Stabilität des Geschwindigkeits-Stellsignal zu dem Drive als lineare Funktion der Soll-Ist-Abweichung berechnet wird.

6. Verfahren nach einem der Ansprüche 1 bis 5,
   **dadurch gekennzeichnet**,
   dass der elektromotorische Antrieb zum Beispiel über einen permanent erregten Servomotor oder mit einem geregelten Asynchronmotor oder einem geregelten Gleichstrommotor erfolgt.

7. Verfahren nach einem der Ansprüche 1 bis 6,
   **dadurch gekennzeichnet**,
   dass während der Einspritzphase der Volumen- bzw. der Massestrom ($\dot{m}$) des durch die Angussdüse strömenden Kunststoffes als Zielgrösse geregelt bzw. begrenzt und insbesondere aus den ermittelten Werten: Druckgradient, Schnecken-Geschwindigkeit und -Position sowie Schneckendurchmesser, Materialkonstanten berechnet wird.

8. Verfahren nach einem der Ansprüche 1 bis 7,
   **dadurch gekennzeichnet**,
   dass mittels einer Störgrössenaufschaltung der Massenstrom ($\dot{m}$) durch die Angussdüse als Funktion der Druckregelung überlagert bzw. aufgeschaltet wird, zur grösstmöglichen Annäherung des Spritzdruckes an den Sollwert auch bei höheren Spritzgeschwindigkeiten.

9. Verfahren nach einem der Ansprüche 1 bis 8,
   **dadurch gekennzeichnet**,
   dass die Abweichungen des tatsächlichen Druck- und/oder Kraftverlaufes in Bezug auf vorgegebene Sollfunktionen ein vorgegebener Geschwindigkeitsverlauf errechnet und über einen digitalen Regler korrigiert werden, wobei vorzugsweise der Druck- beziehungsweise Kraftregelung eine Hub-Wegregelung überlagert wird, insbesondere zur Vermeidung von Kollisionen mit mechanischen Hubgrenzen.

10. Verfahren nach einem der Ansprüche 1 bis 9, **dadurch gekennzeichnet**, dass die Zielgrössen vorzugsweise mittels digitalen Rechnern, in Software, kaskadenartig geregelt bzw. begrenzt werden.

11. Verfahren nach einem der Ansprüche 1 bis 10, **dadurch gekennzeichnet**, dass zusätzlich Druckgrenzwerte über der Zeit und/oder über dem Weg vorgegeben werden, der Druck-Ist-Wert oder ein dazu korrelierender Wert gemessen und als Regelung überlagert beziehungsweise zu dessen Korrektur verwendet, wobei vorzugsweise während der Spritzphase insbesondere während der Füllphase die Spritzgeschwindigkeit als weitere Zielgrösse geregelt bzw. begrenzt wird, und besonders vorzugsweise der Sollwert für wenigstens eine der Zielgrössen als Konstantwert oder in Funktion von Zeit bzw. Weg vorgegeben wird.

12. Verfahren nach Anspruch 1, **dadurch gekennzeichnet**, dass die Werte als ganze Rezepte mit Sollwertvorgaben beziehungsweise Sollwertkurven bzw. Grenzwerte oder entsprechender Bandbreiten für je einen spezifischen Arbeitsablauf beziehungsweise Arbeitszyklus der Rotorelektronik zugeführt werden, wobei die Synchronisation mehrerer Achsen durch die Driveintelligenz durchgeführt wird.

13. Vorrichtung zur Steuerung/Regelung des Spritzvorganges in einer Spritzgiessmaschine über ein Steuerungs- und Regelgerät sowie einer Motorelektronik, wobei die Einspritzschnecke motorisch angetrieben und elektromechanisch übersetzt axial bewegt wird, wobei für die Füllphase, die Nachdruckphase und die Plastifizierphase/Staudruckphase als Stellgrösse ein Geschwindigkeitssignal zu der Motorelektronik verwendet wird, und das Motorsteuerungs- und Regelgerät einen Eingang von einem Wegsensor und einem Drucksensor aufweist und als Mehrgrössenregler ausgebildet ist, die Geschwindigkeit regelt und mit seiner Stellgrösse den Geschwindigkeitseingang der Motorelektronik ansteuert.

14. Vorrichtung nach Anspruch 13, **dadurch gekennzeichnet**, dass wenigstens eine weitere Achse der Spritzgiessmaschine zum Beispiel der Formschluss und/oder der Auswerfer und/oder der Kernzug bzw. die Kernzüge und/oder die Einspritzaggregatverschiebung geregelt bzw. begrenzt wird.

15. Vorrichtung nach einem der Ansprüche 13 oder 14, **dadurch gekennzeichnet**, dass in dem Bereich der Spritzgiessmaschine wenigstens ein Sensor zur Erfassung des Druckes für die Kunststoffmasse und/oder der Kraft und/oder des Stromes des betreffenden Antriebsmotores an der Verschiebemechanik der Spritzachse und/oder an der Schliessachse und/oder der Auswerfachse und/oder an der Spritzaggregatachse angeordnet ist.

16. Vorrichtung für zwei, insbesondere für drei oder mehrere Achsen mit entsprechenden Antriebs-Kontrollern, nach einem der Ansprüche 13 bis 15, **dadurch gekennzeichnet**, dass sie wenigstens einen Mehrfachdrive aufweist, welcher zusätzlich zu den Kontrollern als Funktionseinheit einen Rezeptspeicher mit einem Driverechner aufweist, wobei der Arbeitsablauf der entsprechenden Achsen von dem Driverechner koordiniert steuer- und/oder regelbar sind, wobei der Mehrfachdrive vorzugsweise über einen Datenbus, besonders vorzugsweise einen Sensor/Actor Businterface bzw. einen Can-Bus an einem übergeordneten Rechner-Programmspeicher zuschaltbar ist.

17. Vorrichtung nach Anspruch 16, **dadurch gekennzeichnet**, dass der Mehrachsdrive als Baueinheit mit integriertem Rezeptspeicher und Driverechner mit vorzugsweise digitaler Signalverarbeitung ausgebildet ist, wobei er besonders vorzugsweise einen oder mehrere Lageregler sowie einen Interpolator zur mehrachsigen Synchronisation von Bewegungs- und/oder Bahnkurven aufweist.

**Claims**

1. Method of controlling the injection process in an injection moulding machine via a controller and motor electronics, wherein the injection screw is motor driven and is electromechanically moved axially, wherein moreover a speed signal to the motor electronics is used as variable for the filling phase, the hold pressure phase and the plasticization/back pressure phase, the motor controller has an input from a displacement sensor and a pressure sensor and is designed as a multi-variable controller, controls the speed, sets the speed input of the motor electronics with its variable, and the injection pressure and displacement limit as processing parameters are controlled for the pressure and plasticization phase as target variables.

2. Method according to claim 1, characterized in that control takes place in a non-linear manner.

3. Method according to claim 1 or 2, characterized in that the injection pressure, the injection speed and the displacement limit as parameters are controlled and limited via the multi-variable controller via the speed signal to the motor electronics, for maximum approximation to the target variable desired values, the parameters for the multi-variable controller forming a type of envelope limiting hood, while the other parts of the controller are inactive at the corresponding moment.

4. Method of guiding the injection process according to one of claims 1 to 3, characterized in that, in the large-signal range, the speed adjusting signal to the drive is calculated by a parabolic or root-like function of the desired/actual pressure deviation and/or the desired/actual displacement deviation preferably with the maximum amplification factor for approximation to the maximum acceleration of the servomotor, particularly preferably essentially by the formula

$$\sqrt{|(P \text{ set} - P \text{ actual})|} \times kp = \pm \text{ variable}$$

or

$$\sqrt{|(S \text{ desired} - S \text{ actual})|} \times ks = \pm \text{ variable}.$$

5. Method according to one of claims 1 to 4, characterized in that, in particular in the large-signal range for optimizing the injection process in order to make use of the higher angular deceleration under load, the amplification factor (K1 or K2) is unsymmetrical in design, and/or in the minimum signal range the speed adjusting signal to the drive is calculated as a linear function of the desired/actual deviation for achieving stability.

6. Method according to one of claims 1 to 5, characterized in that the electric motor drive is effected, for example, via a permanently excited servomotor or with a controlled asynchronous motor or a controlled d.c. motor.

7. Method according to one of claims 1 to 6, characterized in that, during the injection phase, the volumetric and mass flow (m) of the plastics material flowing through the inlet nozzle is controlled and limited as target variable and is calculated, in particular, from the determined values for pressure gradient, screw speed and position as well as screw diameter, material constants.

8. Method according to one of claims 1 to 7, characterized in that the mass flow (m) through the feed nozzle is superimposed or applied as a function of pressure control by means of disturbance application, for maximum approximation of the injection pressure to the desired value even at elevated injection speeds.

9. Method according to one of claims 1 to 8, characterized in that the deviations in the actual pressure and/or force trend are calculated with respect to predetermined desired functions of a predetermined speed trend and are corrected via a digital controller, stroke displacement control preferably being superimposed on the pressure or force control, in particular to avoid collisions with mechanical stroke limits.

10. Method according to one of claims 1 to 9, characterized in that the target variables are preferably controlled and limited in the manner of a cascade by means of digital computers, in software.

11. Method according to one of claims 1 to 10, characterized in that pressure limit values are additionally predetermined over time and/or over the displacement, the actual pressure value or a value correlated thereto is measured and is superimposed as control or used for correction thereof, the injection speed being controlled or limited as a further target variable, preferably during the injection phase, in particular during the filling phase, and the desired value for at least one of the target variables particularly preferably being predetermined as a constant value or as a function of time and displacement.

12. Method according to claim 1, characterized in that the values are supplied as complete recipes with desired value selections or desired value curves and limit values or corresponding band widths for a specific operating sequence or operating cycle to the rotor electronics, several axes being synchronized by the drive intelligence.

13. Device for controlling the injection process in an injection moulding machine via a controller and motor electronics, wherein the injection screw is motor driven and is electromechanically moved axially, wherein a speed signal to the motor electronics is used as variable for the filling phase, the hold pressure phase and the plasticization/back pressure phase, and the motor controller has an input from a displacement sensor and a pressure sensor and is designed as a multi-variable controller, controls the speed and sets the speed input of the motor electronics with its variable.

14. Device according to claim 13, characterized in that at least one further axis of the injection moulding machine, for example the mould clamping mechanism and/or the ejector and/or the core puller or pullers and/or the injection unit displacement is controlled or limited.

**15.** Device according to one of claims 13 or 14, characterized in that in the region of the injection moulding machine at least one sensor for detecting the pressure for the plastics mass and/or the force and/or the power of the respective drive motor is arranged on the displacement mechanism of the injection axis and/or on the closing axis and/or the ejection axis and/or the injection unit axis.

**16.** Device for two, in particular for three or more axes with corresponding drive controllers according to one of claims 13 to 15, characterized in that it comprises at least one multiple drive which, in addition to the controllers as functional unit, comprises a recipe store with a drive computer, the operating sequence of the corresponding axes being controllable in a coordinated manner by the drive computer, the multiple drive preferably being connectable via a data bus, particularly preferably a sensor/actor bus interface or a can bus on a superimposed computer program memory.

**17.** Device according to claim 16, characterized in that the multiple axis drive is designed as a unit with an integrated recipe store and drive computer with preferably digital signal processing, and particularly preferably comprises one or more position controllers and an interpolator for multi-axis synchronization of movement and/or path curves.

**Revendications**

**1.** Procédé de commande/régulation de l'opération d'injection dans une machine de moulage par injection au moyen d'un appareil de commande et de régulation et d'une électronique de moteur, la vis sans fin d'injection étant déplacée axialement par entraînement par moteur et transmission électromécanique, tandis qu'en outre, pour la phase de remplissage, la phase de maintien de pression et la phase de plastification/phase de pression dynamique, un signal de vitesse à destination de l'électronique de moteur est utilisé en tant que grandeur de réglage, l'appareil de régulation et de commande de moteur comporte une entrée en provenance d'un capteur de distance parcourue et un capteur de pression, est réalisé sous forme d'un régulateur à plusieurs grandeurs, règle la vitesse et commande, par sa grandeur de réglage, l'entrée de vitesse de l'électronique de moteur et, pour la phase de pression et plastification, la pression d'injection et la limite de distance parcourue font, en tant que grandeurs-cibles, l'objet d'une régulation en tant que paramètres de processus.

**2.** Procédé suivant la revendication 1, caractérisé en ce que la régulation a lieu d'une manière non linéaire.

**3.** Procédé Suivant la revendication 1 ou 2, caractérisé en ce qu'au moyen du régulateur à plusieurs grandeurs, la pression d'injection, la vitesse d'injection et la limite de distance parcourue font l'objet d'une régulation ou d'une limitation, en tant que paramètres, au moyen du signal de vitesse à destination de l'électronique de moteur, en vue de l'approximation la plus grande possible par rapport aux valeurs de consigne des grandeurs-cibles, les paramètres prévus pour le régulateur à plusieurs grandeurs constituant un genre de plafond de limitation d'enveloppe, tandis qu'à l'instant correspondant, les autres parties de régulateur sont inactives.

**4.** Procédé de conduite de l'opération d'injection suivant l'une des revendications 1 à 3, caractérisé en ce que, dans la zone de grand signal, on calcule le signal de réglage de vitesse à destination de la commande de mouvement au moyen d'une fonction de type parabolique, ou d'une fonction de type racine carrée, de l'écart valeur de consigne-valeur réelle de pression et/ou l'écart valeur de consigne-valeur réelle de distance parcourue, de préférence avec le facteur d'amplification le plus grand possible, en vue de l'approximation par rapport à l'accélération la plus grande possible du moteur d'asservissement, notamment de préférence essentiellement suivant la formule :

$$\sqrt{|(Pconsigne - Préelle)|} \times kp = \pm \, gdr$$

(grandeur de réglage) ou

$$\sqrt{|(Sconsigne - Sréelle)|} \times ks = \pm \, gdr.$$

**5.** Procédé suivant l'une des revendications 1 à 4, caractérisé en ce que, surtout dans la zone de grand signal, en vue de l'optimisation de l'opération d'injection, afin de mettre à profit le retard angulaire très important en charge, le facteur d'amplification (K1 ou K2) est prévu avec une valeur non symétrique et/ou en ce que, dans la zone de plus petit signal, l'écart valeur de consigne-valeur réelle est calculé, sous forme d'une fonction linéaire, en vue d'obtenir la stabilité du signal de réglage de vitesse à destination de la commande de mouvement.

**6.** Procédé suivant l'une des revendications 1 à 5, caractérisé en ce que l'entraînement par moteur électrique a par exemple lieu au moyen d'un moteur asservi en permanence sous excitation ou au moyen d'un moteur asynchrone à régulation ou d'un moteur à courant continu à régulation.

**7.** Procédé suivant l'une des revendications 1 à 6, caractérisé en ce que, pendant la phase d'injection, le débit volumique ou le débit massive ($\dot{m}$) de la matière plastique passant par la buse d'injection fait l'objet, en tant que grandeur-cible, d'une régulation ou d'une limitation et est notamment calculé à partir des valeurs relevées : gradient de pression, vitesse de la vis sans fin, position de la vis sans fin, diamètre de la vis sans fin, constantes de la matière.

8. Procédé suivant l'une des revendications 1 à 7, caractérisé en ce qu'au moyen d'une reprise de grandeurs perturbatrices, le débit massique (ṁ) traversant la buse d'injection fait, en fonction de la régulation de pression, l'objet d'une superposition ou d'une reprise, en vue de l'approximation la plus grande possible de la pression d'injection par rapport à la valeur de consigne, même pour des vitesses très élevées d'injection.

9. Procédé suivant l'une des revendications 1 à 8, caractérisé en ce qu'on calcule les écarts de la variation de pression et/ou de force effective en référence à des fonctions de consigne préfixées une variation de vitesse préfixée et on les corrige au moyen d'un régulateur numérique, une régulation course-distance parcourue étant de préférence superposée à la régulation de pression ou de force, notamment en vue d'éviter des collisions avec des fins de course mécaniques.

10. Procédé suivant l'une des revendications 1 à 9, caractérisé en ce que les grandeurs-cibles font l'objet d'une régulation ou d'une limitation, en cascade, de préférence au moyen de calculateurs numériques, dans des logiciels.

11. Procédé suivant l'une des revendications 1 à 10, caractérisé en ce qu'en outre, des valeurs limites de pression par rapport au temps et/ou par rapport à la distance parcourue sont préfixées, la valeur réelle de pression ou une valeur présentant une corrélation avec celle-ci est mesurée et est superposée en tant que régulation ou utilisée pour la correction de celle-ci, tandis que, de préférence pendant la phas d'injection, notamment pendant la phase de remplissage, la vitesse d'injection fait, en tant que grandeur-cible supplémentaire, l'objet d'une régulation ou d'une limitation et notamment de préférence la valeur de consigne prévue pour au moins l'une des grandeurs-cibles est préfixée en tant que valeur constante ou en fonction du temps ou de la distance parcourue.

12. Procédé suivant la revendication 1, caractérisé en ce que les valeurs Dont envoyées à l'électronique de moteur en tant que formulations complètes comportant des valeurs de référance formées de valeurs de consigne, ou des courbes de valeurs de consigne ou des valeurs limites ou des largeurs de bande correspondantes pour chaque déroulement de travail spécifique ou cycle de travail, la synchronisation de plusieurs axes étant exécutée au moyen de l'électronique de moteur.

13. Dispositif de commande/régulation de l'opération d'injection dans une machine de moulage par injection au moyen d'un appareil de commande et de régulation et d'une électronique de moteur, la vis sans fin d'injection étant déplacée axialement par entraînement par moteur et transmission électromécanique, tandis que, pour la phase de remplissage, la phase de maintien de pression et la phase de plastification/phase de pression dynamique, un signal de vitesse à destination de l'électronique de moteur est utilisé en tant que grandeur de réglage et l'appareil de régulation et de commande de moteur comporte une entrée en provenance d'un capteur de distance parcourue et un capteur de pression, est réalisé sous forme d'un régulateur à plusieurs grandeurs, règle la vitesse et commande, par sa grandeur de réglage, l'entrée de vitesse de l'électronique de moteur.

14. Dispositif suivant la revendication 13, caractérisé en ce qu'au moins un autre axe de la machine de coulée par injection, par exemple la fermeture de moule et/ou l'éjecteur et/ou le tire-noyau ou les tire-noyau et/ou le déplacement de bloc d'injection, font l'objet d'une régulation ou d'une limitation.

15. Dispositif suivant l'une des revendications 13 ou 14, caractérisé en ce que, dans la zone de la machine de moulage par injection, au moins un capteur servant à la détermination de la pression correspondant à la masse de matière plastique et/ou de la force et/ou du courant du moteur d'entraînement concerné sont disposés sur le mécanisme de déplacement de l'axe d'injection et/ou sur l'axe de fermeture et/ou l'axe d'éjection et/ou sur l'axe de bloc d'injection.

16. Dispositif, prévu pour deux axes, notamment trois axes ou davantage, comportant des contrôleurs d'entraînement correspondants, suivant l'une des revendications 13 à 15, caractérisé en ce qu'il comprend au moins une commande de mouvement multiple qui, en plus des contrôleurs, comprend, en tant qu'unité fonctionnelle, une mémoire de formulation comportant un calculateur de commande de mouvement, le déroulement de travail des axes Correspondants pouvant faire l'objet d'une commande et/ou une régulation d'une manière coordonnée par le calculateur de commande de mouvement, tandis que la commande de mouvement multiple peut être connectée à un calculateur-mémoire de programme ayant un rang supérieur en subordination, de préférence au moyen d'un bus de données, notamment de préférence une interface capteur/actionneur par bus ou un bus-can.

17. Dispositif suivant la revendication 16, caractérisé en ce que la commande de mouvement multiple est réalisée en tant qu'unité structurelle comportant une mémoire intégrée de formulation et un calculateur de commande de mouvement à traitement de signaux de préférence de type numérique, tandis qu'il comprend notamment de préférence un ou plusieurs régulateurs de position et un interpolateur en vue de la synchronisation à plusieurs axes de courbes de déplacement et/ou trajectoires.

FIG 1

EP 0 647 175 B1

## Druck über der Zeit

FIG 2

Füllen — Nachdruck — Einspritzen — Plastifizieren

P (bar), t (Sek.), A, B, C

## Druck – Weg – Funktion

FIG 2a

P (bar), S (mm), Start, Rückwärts-Bewegung

16

## Stand der Technik — FIG 3

P (bar)

1600, 1200, 800, 400, 0

D, P, V, E

ist-Druck

ist-Geschwindigkeit

Zeit, (t) (ms)

0 200 400 600 800

Vco | Md co | Pco

## Erfindung — FIG 4

Soll/Ist

Geschwindigkeit (mm/s): 200, 175, 150, 125, 100, 75, 50, 25, 0, -25, -50

Druck (bar): 2000, 1800, 1600, 1400, 1200, 1000, 800, 600, 400, 200, 0

Geschwindigkeits-Stellgrosse

Geschwindigkeits-ist-Wert

ist-Druckwert

Soll-Druck

Zeit (t) (ms)

0 200 400 600 800

## FIG 3a

Lineare Regler mit exponentieller Einschwingung

Soll/Ist

Geschwindigkeit

Druck

Zeit (ms)

## FIG 4a    Statische p = f(v) Kennlinie

Druck    Auslegungsgrenzwert für Spritzdruck

Auslegungsgrenzwert p
für Geschwindigkeit

neuer, nicht-linearer
Regler

linearer Regler mit
hoher Druckabschneidung

Spritzgeschwindigkeit (mm/s)

FIG 5

FIG 6

EP 0 647 175 B1

MMI

FIG. 7

51

50    Can-Bus

P

digital +
analog %

SPS
(200 Hz)

Optional

52

Einspritz-
Drive
2 K Hz
3 Achsen

53

Form-Drive
→ 2 K Hz
→ 2 bzw. 3
Achsen

54

In/out
analog +
digital

Optional:
Drucksensor-
Eingang im
Drive

P/U

P

t,s

V

t,s

Einspritzen
(Translation)

Plastifizieren
(Rotation)

Aggregat-
Bewegung

Formschluss

Auswerfer
(Kernzug)

EP 0 647 175 B1

## FIG 8

### Herkömmliche Lageregelung.

Soll-Lage $\underset{61}{\boxed{KP}}$ $\underset{62}{\boxed{Dr/Mot.}}$ $\underset{63}{\boxed{S}}$ Ist-Lage

## FIG 8a

### Herkömmlicher linearer Regler

$Xe \longrightarrow \boxed{\phantom{}} Xa$

## FIG 9  Beispiel für optimierten erfindungs-
gemässen Regler mit linear/para-
bolischer Funktion

Stellgrösse y

$Y_1 = K_1\sqrt{x - P_1}$

$\alpha_1$

$P_2$

Regel-

$\alpha_2$   $P_1$   abweichung x

$Y_2 = K_2\sqrt{P_2 - x}$

FIG 10    Verbesserte Lageregelung

Soll-Lage —⊗→ [PK-FUB] 71 → [Dr/Mot.] 72 → [S] 73 → Ist-Lage

FIG 10a    Optimierte Druckregelung

Soll-Druck —⊗→ [PK-FUB] 81 → [Dr/Mot.] 82 → [S] 83 → [Cx] 84 → Ist-Druck

FIG 10b    Optimaler Spritzkontroller

Weg — a ... b

c  d  e

Soll-Druck —⊗→ [Kp] 91 → ⊗ + → [ ⟋ ] 92 → [PK-FUB] 93 → [Dr/Mot.] 94 → [S] 95 → [Cx] → Ist-Druck

= f(s,t)

Ist-Weg

EP 0 647 175 B1

FIG 11

Programmspeicher, Sollkurven
Startprogramm, Ablaufprogramm

110 Sp

MM I /
Sequenz

111

112 Sensor/Actor-Bus

Sensoren
1,2,3,4..

M.

Soll    Ist

115, Drive-
Rechner

Rezept-
Speicher 116

Interpolator – 117

Mehrachs-
Drive 113

| Pos. Regler 1 | Pos. Regler 2 | Pos. Regler 3 |
|---|---|---|
| V-Regler | V-Regler | V-Regler |
| I-Regler (Md) | I-Regler (Md) | I-Regler (Md) |
| $\varphi$-Kontrolle | $\varphi$-Kontrolle | $\varphi$-Kontrolle |

114, Kontroller
1,2,3...

$M_1$    $M_2$    $M_3$    ← Achsen

EP 0 647 175 B1

FIG12